# EUROPÄISCHE PATENTSCHRIFT

(11) **EP 0 834 656 B1**
(45) Veröffentlichungstag und Bekanntmachung des Hinweises auf die Patenterteilung: **12.12.2001**
(21) Anmeldenummer: 97116759.8
(22) Anmeldetag: 26.09.1997
(51) Int. Cl.: F16B 5/00

(54) **Einrichtung zum Befestigen eines Bauteils an einer Wand, insbesondere der Wand einer Kraftfahrzeugkarosserie**
Device for fastening a component to a wall, particularly a wall of a motor vehicle body
Dispositif de fixation d'un appareil contre une paroie, en particulier la paroie d'une carrosserie de véhicule automobile

(30) Priorität: 07.10.1996 DE 19641243
(43) Veröffentlichungstag der Anmeldung: 08.04.1998
(73) Patentinhaber: ADAM OPEL AG, 65423 Rüsselsheim (DE)
(72) Erfinder: Herrmann, Hartmut, Dipl.-Ing., 55270 Ober-Olm (DE)
(74) Vertreter: Kümpfel, Heinz, Dipl.-Ing.

(56) Entgegenhaltungen:
- DE-A- 3 936 838
- DE-B- 1 116 948
- DE-U- 8 317 937
- FR-A- 2 670 252
- US-A- 2 602 209

## Beschreibung

Die Erfindung betrifft eine Befestigungseinrichtung mit einem Bauteil und einer Wand eines anderen Teils, insbesondere der Wand einer Kraftfahrzeugkarosserie, gemäß dem Oberbegriff des ersten Patentanspruches.

Mit DE-Auslegeschrift 11 16 948 ist ein Befestigungselement beschrieben, welches zu einer sicheren Verankerung einer Schraube an einer aus Blech bestehenden Wand dient. Dazu weist das Befestigungselement einen plattenförmigen Kopf und einen zapfenförmigen Rumpf auf, die beide von einer kreiszylindrischen Öffnung zur Aufnahme einer Schraube durchsetzt sind. Zwischen Kopf und Rumpf ist eine Kerbe vorgesehen. Im Bereich der Kerbe befindet sich am Kopf eine in den Bereich der Kerbe weisende Raste, die mit dem plattenförmigen Kopf elastisch nachgeben kann. Wird der Rumpf in eine in der Form angepasste Blechöffnung soweit eingeführt, dass der Kopf auf der Oberfläche des Bleches aufliegt, dann kann das Befestigungselement in der Blechebene so verschoben werden, dass die Kerbe hinter den Rand der Öffnung greift. In einer Endlage kommt die Raste an der Leibung des Loches zur Anlage und verhindert ein Zurückschieben des Befestigungselementes. Auf dieses so fixierte Befestigungselement lassen sich durch Eindrehen einer Schraube in die zylindrische Öffnung insbesondere plattenförmige Teile punktuell befestigen. Als Befestigungsmittel werden für jeden Befestigungspunkt zumindest zwei Losteile, nämlich das Befestigungselement an sich und eine Schraube benötigt. Die Verwendung eines solchen Befestigungselementes setzt voraus, dass Zugänglichkeit zu den einzusetzenden Schrauben gegeben ist, was insbesondere bei einer Anwendung in Kraftfahrzeugkarosserien nicht immer gegeben ist.

Eine derartige Einrichtung ist mit DE 39 36 838 A1 beschrieben. Bei dieser als Rastverbindung bezeichneten Einrichtung ist das an einer dünnen Wand zu befestigende Bauteil mit zwei T-förmigen Führungsstücken versehen, die in Schlitze der Wand eingeschoben werden. Zwischen den Führungsstücken befindet sich an dem Bauteil weiterhin eine Rastlasche, die in eine Rastöffnung der Wand einrastet, wenn das Bauteil weit genug in die Schlitze eingeschoben ist. An einem Anschlag der Wand anliegende Federzungen des Bauteils verhindern ein Klappern.

Bei einer derartigen Rastverbindung sind an der Wand mindestens drei querschnittsschwächende Einschnitte erforderlich, nämlich die beiden Schlitze und eine Rastöffnung. Da bei Kraftfahrzeugkarosserien möglichst alle Bauteile als tragende Elemente wirken sollen, ist eine Schwächung von Bauteilen durch Einbringen von Einschnitten nicht erwünscht. Außerdem müssen die beiden Schlitze zur Aufnahme der Führungsstücke mit relativ großer Genauigkeit zueinander angeordnet sein, so daß sie bei einem umgeformten Blechteil erst nach dem Umformprozeß eingeschnitten werden können. Dies erfordert zusätzlichen Aufwand.

Mit DE-GM 83 17 937 ist ein Kunststoff-Clip zur Befestigung von Bauteilen an einer tragenden dünnwandigen Unterlage, z. B. einem Blechteil einer Kraftfahrzeugkarosserie bekannt. Bei diesem trägt das betreffende Bauteil einen auflageseitig angeformten zapfenartigen Vorsprung mit mehreren federnden Spreizfüßen, die in Richtung der Auflageseite des Clips schräg nach außen verlaufen. Nach dem Eindrücken des Clips in eine Bohrung des Blechteils federn die Spreizfüße auf und halten den Clip widerhakenartig fest. Die Haltekraft derartiger Clips ist somit abhängig von der Stabilität der elastischen Spreizfüße. Da diese nicht beliebig vergrößert werden kann, sind derartige Clips für die Befestigung schwerer Bauteile nicht geeignet.

Aufgabe der Erfindung ist es, eine Einrichtung zum Befestigen von Bauteilen so zu verbessern, daß die Genauigkeitsanforderungen der vorzubereitenden Öffnung gering sind und mit der auch schwere Bauteile sicher befestigt werden können.

Die Erfindung löst diese Aufgabe mit den Merkmalen des Patentanspruches 1. Vorteilhafte Weiterbildungen der Erfindung sind Gegenstand der Unteransprüche.

Bei einer derartigen Einrichtung ist an der Wand, an der das Bauteil befestigt werden soll, lediglich ein Loch in der Form des Querschnitts des Zapfens vorzusehen. In dieses Loch wird der an einer Führungsfläche des Bauteils befindliche Zapfen eingedrückt, wobei lediglich die Federspannung der Raste, die zuerst an der Fläche der Wand anliegt, zu überwinden ist. Sobald die am Zapfen befindliche Kerbe deckungsgleich mit der Dicke der Wand liegt, läßt sich das Bauteil in der Ebene der Führungsfläche derart verschieben, daß der Rand des Loches an einer Seite in die Kerbe eingreift und am Grund der Kerbe zur Anlage gelangt. Der gegenüberliegende Rand des Loches wird dadurch frei für die an der Basis des Zapfens angeformte Raste, die somit durch ihre Eigenspannung in diesen freien Lochbereich einschnappt und ein Zurückschieben des Bauteils verhindert.

Mit dem Verschieben des Bauteils in der Ebene der Führungsfläche wird gleichzeitig ein am Bauteil befindlicher Arretierzapfen in eine weitere Öffnung eingeschoben, die sich an einem im wesentlichen senkrecht zur Führungsfläche angeordneten Wandteil des anderen Teils befindet, z. B. an einer Abwinkelung eines Blechteils. Durch eine an der Basis des Arretierzapfens angeformte Feder, die sich dabei mit Spannung an den senkrechten Wandteil anlegt, kann ein Klappern des Anbauteils sicher vermieden werden.

Bei der erfindungsgemäßen Einrichtung ist es möglich, die Befestigung mittels eines runden und somit leicht herstellbaren Loches zu realisieren. Das runde Loch kann in einem aus Blech hergestellten Teil bereits vor einem späteren Umformungsprozeß eingebracht werden, ebenso wie die Arretieröffnung für den Arretierzapfen. Eine dadurch auftretende größere Toleranz in Form und Abstand der Befestigungslöcher beeinträchtigt die Befestigung nicht.

Die Montagerichtung, nämlich entlang der Führungsfläche, und die Hauptbelastungsrichtung, nämlich senkrecht zur Führungsfläche, sind verschieden. Dadurch ist die federnde Raste von mechanischen Kräften weitgehend entlastet. Die Haltekräfte der Befestigung werden allein vom Querschnitt des Zapfens in Verbindung mit dem Arretierzapfen aufgebracht. Damit kann die Federkraft der Raste unabhängig von der erforderlichen Haltekraft der Befestigung so dimensioniert werden, daß die Montagekraft gering bleibt.

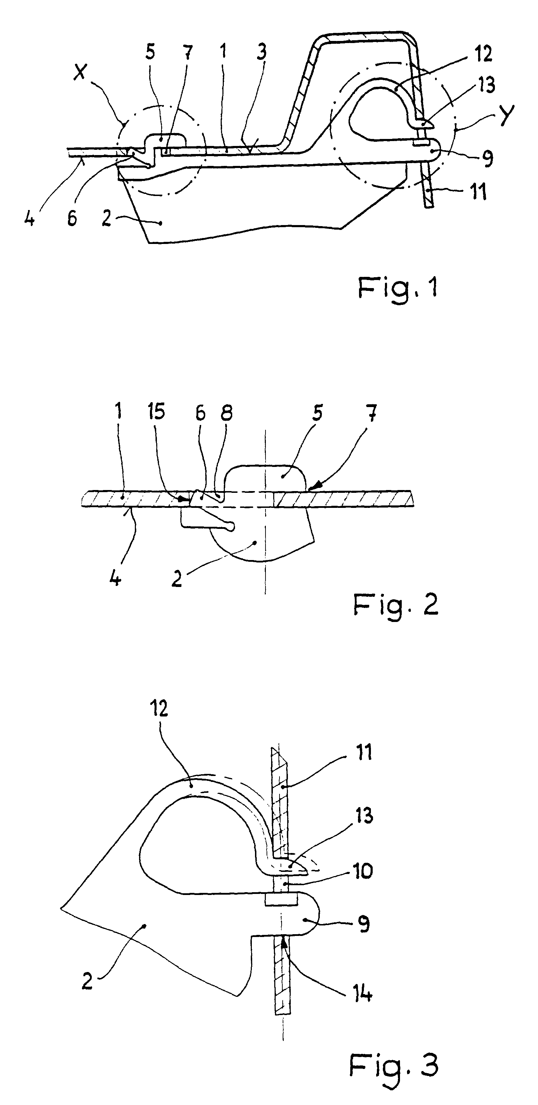

Ein Ausführungsbeispiel der Erfindung ist nachstehend anhand einer Zeichnung näher beschrieben. Es zeigen
- Fig. 1:: die seitliche Ansicht einer erfindungsgemäßen Einrichtung;
- Fig. 2:: die vergrößerte Einzelheit bei X in Figur 1;
- Fig. 3:: die vergrößerte Einzelheit bei Y in Figur 1.

An einer aus Blech bestehenden Wand 1 einer Kraftfahrzeugkarosserie ist mittels der erfindungsgemäßen Einrichtung das Kunststoffgehäuse 2 eines Gerätes, z. B. ein Luftfilterkasten, befestigt. Die Einrichtung besteht im wesentlichen aus einer am Kunststoffgehäuse 2 befindlichen Führungsfläche 3, die an einer Gegenfläche 4 der Wand 1 anliegt, mindestens einem auf der Führungsfläche 3 befindlichen Zapfen 5 mit einer am Fuß des Zapfens 5 angeformten, aus der Führungsfläche 3 herausfedernden Raste 6 und einer parallel zur Führungsfläche 3 verlaufenden und in bezug auf den Zapfen 5 entgegen der Raste 6 weisenden Kerbe 7 sowie einer Bohrung 8 für jeden der Zapfen 5 in der Wand 1.

Jeder Zapfen 5 hat einen kreisrunden Querschnitt. Diesem Querschnitt entsprechend ist die Form der Bohrungen 8, so daß jeder Zapfen 5 in jeweils eine der Bohrungen 8 gesteckt werden kann. Die Höhe der Kerbe 7 entspricht der Dicke der Wand 1. Am Kunststoffgehäuse 2 ist zumindest ein Arretierzapfen 9 vorgesehen, der sich mit seiner Längsachse parallel zur Führungsfläche 3 erstreckt und in Richtung der Kerbe 7, bezogen auf den Zapfen 5, ausgerichtet ist. Der Arretierzapfen 9 greift in eine Arretieröffnung 10 eines annähernd senkrecht zur Führungsfläche 3 angeordneten Wandteils 11 der Wand 1 ein. Dem Arretierzapfen 9 ist eine Feder 12 zugeordnet, die sich an dem Wandteil 11 abstützt und das Kunststoffgehäuse 2 von diesem weg drückt. Ein Fortsatz 13 der Feder 12 gleitet beim Verschieben des Kunststoffgehäuses 2 gegenüber der Wand 1 zusammen mit dem Arretierzapfen 9 in die Arretieröffnung 10. Bei weiterem Verschieben bis zum Einrasten der Raste 6 in die Bohrung 8 spannt sich die Feder 12 und drückt dabei den Arretierzapfen 9 gegen die Laibung 14 der Arretieröffnung 10. Gleichzeitig wird auch die Raste 6 in Anschlag an der Laibung 15 der Bohrung 8 gehalten.

Beim Befestigen des Kunststoffgehäuses 2 an der Wand 1 wird die Führungsfläche 3 auf die Gegenfläche 4 so aufgelegt, daß dabei der bzw. die Zapfen 5 in die ihnen zugeordneten Bohrungen 8 eingreifen. Durch Andrücken des Kunststoffgehäuses 2 an die Gegenfläche 4 legen sich dabei die sonst unter Eigenspannung aus der Führungsfläche 3 herausragenden Rasten 6 so um, daß sie innerhalb der Führungsfläche 3 liegen. Die Federkraft der Rasten 6 kann dabei gering sein, so daß auch die Andrückkraft bei der Montage gering bleiben kann. Wenn sich die Führungsfläche 3 und die Gegenfläche 4 berühren, dann liegt die Kerbe 7 jedes der Zapfen 5 gegenüber der Wand 1, und zwar in einer Weise, daß beim Verschieben des Kunststoffgehäuses 2 in der Ebene der Führungsfläche 3 die Wand 1 am Randbereich der Bohrung 8 in die Kerbe 7 eingreift. Nach weiterem Verschieben, bei dem der Randbereich der Bohrung 8 nahe dem Grund der Kerbe 7 gelangt, befindet sich der gegenüberliegende Randbereich der Bohrung 8 jeweils über der Raste 6, die somit infolge ihrer Eigenspannung in den Bereich der Bohrung 8 einfedert und an deren Laibung 15 anliegt. Gleichzeitig ist bei Beginn des Verschiebevorganges der Arretierzapfen 9 zusammen mit dem Fortsatz 13 der Feder 12 in die Arretieröffnung 10 eingefädelt. Mit zunehmendem Verschiebeweg spannt sich die Feder 12 in einer Weise, daß einerseits der Arretierzapfen 9 an der Laibung 14 der Arretieröffnung 10 unter Vorspannung anliegt, andererseits nach Ende des Verschiebevorganges auch die Raste 6 an der Laibung 15 der Bohrung 8 unter Vorspannung anliegt.

Die Haltekraft der Einrichtung ist allein abhängig vom durchgehenden Querschnitt der Zapfen 5 und unabhängig von der Federkraft der Rasten 6 oder der Kraft der Feder 12. Somit kann die Montage eines Teils wie beispielsweise das Kunststoffgehäuse 2 mit geringem Kraftaufwand erfolgen, auch wenn für dieses Teil erhebliche Haltekräfte während des funktionalen Betriebs erforderlich sind.

Die Bohrung 8 für den Zapfen 5 ist jeweils kreisrund und damit einfach herstellbar. Der Abstand zwischen der Bohrung 8 und der Arretieröffnung 11 kann mit großer Toleranz behaftet sein, da die Länge des Arretierzapfens 9 solche Toleranzen in weitem Maße ausgleicht. Es ist dadurch möglich, die Bohrung 8 und die Arretieröffnung 11 bereits beim Zuschnitt eines die Wand 1 bildenden Bleches vor seiner Verformung einzubringen.

## Patentansprüche

1. Befestigungseinrichtung mit einem Bauteil und einer Wand eines anderen Teils, insbesondere einer Wand (1) einer Kraftfahrzeugkarosserie, wobei zumindest ein an einer auf der Wand aufliegenden Führungsfläche des Bauteils befindlicher Zapfen (5) in eine Bohrung (8) der Wand eingreift und mit einem Vorsprung nach Verschieben des Bauteils an der Wand hinter eine rechtwinklig zur Mittenachse des Zapfens verlaufende Kante der Bohrung an der Rückseite der Wand greift, wobei die Querschnittsform des Zapfens (5) und die Form der Bohrung (8) im wesentlichen gleich sind, der Vorsprung des Zapfens (5) durch eine einseitige mit einer rechtwinklig zu seiner Mittenachse verlaufenden Kerbe (7) gebildet ist, deren axiale Höhe der Dicke der Wand (1) entspricht und am Zapfen (5) diametral gegenüber der Kerbe (7) auf Höhe der Führungsfläche (3) eine in Richtung zur Wand (1) hin federnde Raste (6) vorgesehen ist, die nach dem Verschieben des Bauteils (2) an der Wand (1) und Eingreifen des Vorsprungs hinter die Kante der Wand (1) in den dabei frei werdenden Teil der Bohrung (8) einrastbar ist, wobei beim Verschieben ein zusätzliches senkrecht zur Führungsfläche (3) wirkendes Haltemittel des Bauteils (2) mit der Wand (1) in Wirkverbindung tritt, **dadurch gekennzeichnet, daß** das zusätzliche Haltemittel aus einem im wesentlichen senkrecht zur Mittenachse des Zapfens (5) und in Richtung der Kerbe (7) verlaufenden Arretierzapfen (9) besteht, der in eine Arretieröffnung (10) eines im wesentlichen senkrecht zur Führungsfläche (3) angeordneten Wandteils (11) der Wand (1) einführbar ist.

2. Befestigungseinrichtung nach Anspruch 1, **dadurch gekennzeichnet, daß** dem Arretierzapfen (9) eine Feder (12) zugeordnet ist, deren Federkraft entgegen der Arretierrichtung des Arretierzapfens (9) gerichtet ist und auf das Bauteil (2) wirkt, wobei das Bauteil (2) mittels der Raste (6) des Zapfens (5) in der Bohrung (8) der Wand (1) entgegen der Kraft der Feder (12) fixiert ist.

3. Befestigungseinrichtung nach Anspruch 2, **dadurch gekennzeichnet, daß** die Feder (12) Teil des Bauteils (2) ist und sich an dem senkrechten Wandteil (11) abstützt.

4. Befestigungseinrichtung nach Anspruch 2 und 3, **dadurch gekennzeichnet, daß** die Feder (12) mit einem Fortsatz (13) in die Arretieröffnung (10) eingreift und den Arretierzapfen (9) einseitig an der Laibung (14) der Arretieröffnung (10) in Anlage hält.

5. Befestigungseinrichtung nach Anspruch 1 bis 4, **dadurch gekennzeichnet, daß** der Querschnitt des Zapfens (5) und die Form der Bohrung (8) kreisrund sind.

## Claims

1. Device for fastening to a component and a panel of another part, in particular a panel (1) of a motor vehicle body, wherein at least one stud (5) located on a guide surface of the component resting on the panel engages in a hole (8) in the panel and, after sliding of the component on the panel, grips by a projection behind an edge of the hole on the rear side of the panel running at right angles to the centre axis of the stud, wherein the cross-sectional shape of the stud (5) and the shape of the hole (8) are essentially the same, the projection of the stud (5) is formed by a one-sided notch (7) which runs at right angles to its centre axis and whose axial height corresponds to the thickness of the panel (1), and on the stud (5) diametrically opposite the notch (7) at the level of the guide surface (3) is provided a catch (6) which springs in a direction towards the panel (1) and which, after sliding of the component (2) on the panel (1) and engagement of the projection behind the edge of the panel (1), can be latched in the portion of the hole (8) which becomes free in the process, wherein during sliding an additional retaining means of the component (2) which acts perpendicularly to the guide surface (3) becomes operatively connected to the panel (1), **characterised in that** the additional retaining means consists of a locking stud (9) which runs essentially perpendicularly to the centre axis of the stud (5) and in the direction of the notch (7) and which can be introduced into a locking opening (10) of a panel portion (11) of the panel (1) arranged essentially perpendicularly to the guide surface (3).

2. Fastening device according to claim 1, **characterised in that** associated with the locking stud (9) is a spring (12) whose spring force is directed counter to the locking direction of the locking stud (9) and acts on the component (2), wherein the component (2) is fixed by means of the catch (6) of the stud (5) in the hole (8) in the panel (1) counter to the force of the spring (12).

3. Fastening device according to claim 2, **characterised in that** the spring (12) forms part of the component (2) and is supported on the vertical panel portion (11).

4. Fastening device according to claims 2 and 3, **characterised in that** the spring (12) engages by an extension (13) in the locking opening (10) and keeps the locking stud (9) on one side in contact with the inner surface (14) of the locking opening (10).

5. Fastening device according to claims 1 to 4, **characterised in that** the cross-section of the stud (5) and the shape of the hole (8) are round.

## Revendications

1. Dispositif de fixation comprenant un élément et une paroi appartenant à un autre élément, en particulier une paroi (1) d'une carrosserie de véhicule automobile, dans lequel au moins un tenon (5) prévu sur une surface de guidage en contact la paroi pénètre dans un trou (8) de la paroi et s'accroche avec une saillie, après glissement de l'élément le long de la paroi, derrière un bord du trou, perpendiculaire à l'axe médian du tenon, sur la face arrière de la paroi, dans lequel la forme en section transversale du tenon (5) et la forme du trou (8) sont essentiellement identiques, dans lequel la saillie du tenon (5) est formée par une encoche (7) aménagée sur un côté perpendiculairement à l'axe médian du tenon, dont la hauteur axiale correspond à l'épaisseur de la paroi (1) et dans lequel un cran de verrouillage (6) élastique en direction de la paroi (1) est prévu sur le tenon (5) à l'opposé de l'encoche (7), à la hauteur de la surface de guidage (3), lequel cran de verrouillage, après glissement de l'élément le long de la paroi (1) et engagement de la saillie derrière le bord de la paroi (1), peut être encliqueté dans la partie libérée du trou (8), dans lequel un moyen de fixation supplémentaire de l'élément (2), qui agit perpendiculairement à la surface de guidage, coopère avec la paroi (1) lors du mouvement de glissement, **caractérisé en ce que** le moyen de fixation supplémentaire est formé d'un tenon de blocage (9) qui s'étend essentiellement perpendiculairement à l'axe médian du tenon (5), en direction de l'encoche et qui peut être engagé dans une ouverture de blocage (10) d'une partie de paroi (11) de la paroi (1) essentiellement perpendiculaire à la surface de guidage (3).

2. Dispositif de fixation selon la revendication 1, **caractérisé en ce qu'**un ressort (12) est associé au tenon de blocage (9), ressort dont la force élastique est dirigée dans la direction opposée à la direction de blocage du tenon de blocage (9) et agit sur l'élément (2), l'élément (2) étant bloqué dans le trou (8) de la paroi (1) au moyen de cran de verrouillage (6) du tenon (5) à l'encontre de la force du ressort (12).

3. Dispositif de fixation selon la revendication 2, **caractérisé en ce que** le ressort (12) fait partie de l'élément (2) et prend appui sur la partie de paroi (11) verticale.

4. Dispositif de fixation selon les revendications 2 et 3, **caractérisé en ce que** le ressort (12) s'engage avec un prolongement (13) dans l'ouverture de blocage (10) et maintient le tenon de blocage (9) en appui d'un côté sur le bord (14) de l'ouverture de blocage (10).

5. Dispositif de fixation selon les revendications 1 à 4, **caractérisé en ce que** la section transversale du tenon (5) et la forme du trou (8) sont circulaires.
